# EUROPÄISCHE PATENTSCHRIFT

(11) **EP 4 240 558 B1**
(45) Veröffentlichungstag und Bekanntmachung des Hinweises auf die Patenterteilung: **28.01.2026**
(21) Anmeldenummer: 21783214.6
(22) Anmeldetag: 23.09.2021
(51) Int. Cl.: G01N 9/00, B23K 26/142, B23K 26/352, B23K 37/02, B23K 101/06, B23K 101/12, G01F 23/296, G01N 11/16

(54) **SPÜLAUFSATZ UND VERFAHREN ZUR BEARBEITUNG, INSBESONDERE STRUKTURIERUNG, EINER OBERFLÄCHE EINES WERKSTÜCKS MITTELS LASER**
FLUSHING ADAPTER AND METHOD FOR PROCESSING, SPECIFICALLY STRUCTURING OF A WORKPIECE SURFACE BY LASER
OUTIL D'INTRODUCTION DE GAZ ET METHODE POUR LE TRAITEMENT, EN PARTICULIER LA STRUCTURATION D'UNE SURFACE D'UNE PIECE PAR LASER

(30) Priorität: 09.11.2020 DE 102020129495
(43) Veröffentlichungstag der Anmeldung: 13.09.2023
(73) Patentinhaber: Endress+Hauser SE+Co. KG, 79689 Maulburg (DE)
(72) Erfinder: KESSLER, Simon, 79585 Steinen (DE); SENN, Dieter, 79669 Zell (DE)
(74) Vertreter: Endress + Hauser Group Services (Deutschland) AG+Co. KG
(86) Internationale Anmeldenummer: PCT/EP2021/076263
(87) Internationale Veröffentlichungsnummer: WO 2022/096192

(56) Entgegenhaltungen:
- CN-B- 108 581 195
- DE-A1- 102017 103 001
- KR-B1- 102 139 282
- US-A1- 2018 333 806

## Beschreibung

Die Erfindung betrifft einen Spülaufsatz mit den Merkmalen des Oberbegriffs des ersten Anspruchs und ein Verfahren zur Bearbeitung, insbesondere Strukturierung, einer Oberfläche eines Werkstücks mittels Laser. Einen gattungsgemäßen Spülaufsatz offenbart die CN 108 581 195 B.

Zur Strukturierung von Oberflächen von Werkstücken aus Metallen oder Metalllegierungen, z.B. aus Stahl, können materialabtragende Verfahren angewendet werden. Ein Spezialfall der Strukturierung einer Oberfläche ist das Aufrauen der Oberfläche. Oberflächen werden beispielsweise aufgeraut, um eine bessere Haftung einer Beschichtung zu ermöglichen oder um eine Oberfläche eines Werkstücks zum Ankleben eines anderen Bauteils an die Oberfläche vorzubereiten. Im Stand der Technik bekannte Verfahren zur Strukturierung, insbesondere zum Aufrauen, einer Werkstückoberfläche sind Strahlverfahren, bei denen ein körniges oder pulvriges Strahlmittel auf die zu bearbeitende Oberfläche gestrahlt wird. Ein Beispiel für ein solches Verfahren ist das Sandstrahlen.

Statt eines Partikelstrahls kann zur Strukturierung bzw. zum Aufrauen von Oberflächen auch Laserstrahlung eingesetzt werden. Hierzu wird ein auf die Werkstückoberfläche fokussierter, gepulster Laserstrahl verwendet, der das Material des Werkstücks lokal stark aufheizt und in die Schmelzphase überführt. Dies führt zur Aufrauhung der bestrahlten Oberfläche.

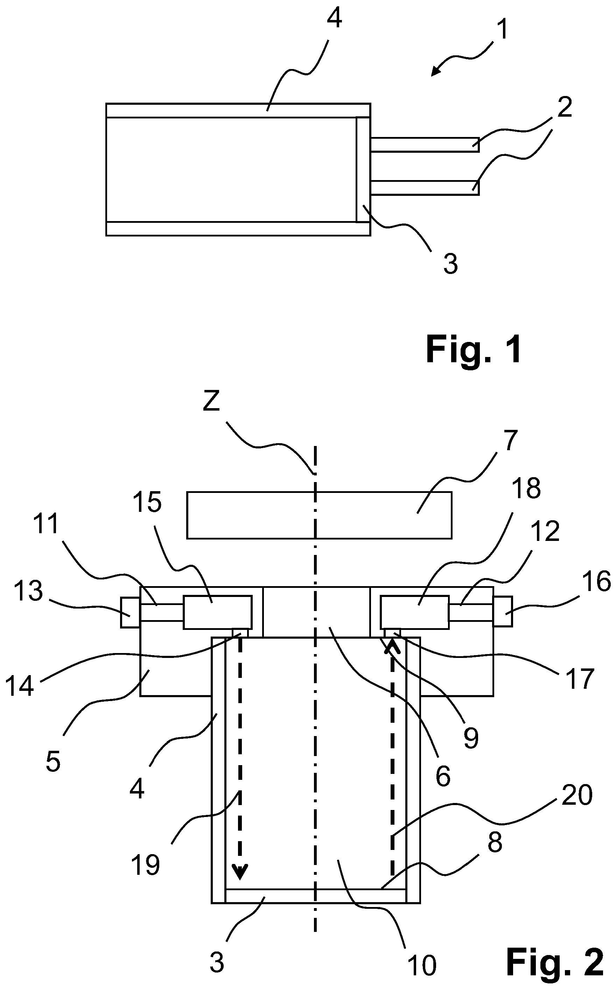

Eine technische Herausforderung ist das Aufrauen von Werkstückoberflächen, die in einer Vertiefung oder als Innenfläche einer einseitig offenen Kammer innerhalb des Werkstücks angeordnet sind. Ein Beispiel für ein solches Werkstück 1 ist in Fig. 1 im Längsschnitt schematisch dargestellt. Es handelt sich dabei um ein Bauteil eines vibronischen Sensors zur Erfassung einer Messgröße eines Mediums, z.B. eines Füllstands oder Grenzstands, einer Viskosität oder einer Dichte, der eine Schwinggabel aufweist. Das Werkstück 1 umfasst eine Schwinggabel mit zwei Schwingelementen 2, z.B. zwei Metallstäben oder -zinken, die symmetrisch auf einer Membran 3 aus Metall sitzen. Die kreisscheibenförmige Membran 3 ist in einem rohrförmigen Gehäuse 4, auch als Rohrverlängerung bezeichnet, gehalten, nämlich derart, dass die Membran 3 das Gehäuse 4 auf einer Seite verschließt.

Zur Messung werden die Schwingelemente 2 in Schwingung versetzt und anhand einer Änderung der Resonanzfrequenz und/oder der Amplitude der Schwingung die Messgröße in bekannter Weise detektiert. Zur Anregung der Schwingung wird eine elektromechanische Wandlereinheit verwendet. Diese wird bei der Fertigung rückseitig an die Membran 3 angeklebt. Zur Verbesserung der Haftung wird die rückseitige, also die dem Inneren des Gehäuses 4 zugewandte Oberfläche 5 der Membran 3 zunächst gereinigt und aufgeraut. Hierzu wird herkömmlich eines der zuvor erwähnten Strahlverfahren verwendet.

Zwar werden beim Aufrauen mittels Strahlverfahren, insbesondere dem Sandstrahlen, zufriedenstellende Ergebnisse erzielt. Nachteilig dabei ist jedoch, dass das in Fig. 1 dargestellte Werkstück 1 nach dem Sandstrahlprozess gründlich von in dem Gehäuse 4 und an der Membranrückseite verbliebenen Partikeln gereinigt werden muss, beispielsweise durch Ausblasen mittels Druckluft, bevor die elektromechanische Wandlereinheit an die Membranrückseite angeklebt werden kann. Dies erfordert manuelle Bearbeitungsschritte und verhindert oder erschwert zumindest eine Automatisierung des Fertigungsprozesses.

Es ist denkbar, eine Effizienzverbesserung beim Fertigungsschritt des Aufrauens der Membranrückseite zu erzielen, indem statt des Sandstrahlverfahrens ein Laserstrukturierungsverfahren eingesetzt wird (vgl. DE 10 2017 103 001 A1). Doch auch bei der Laserbearbeitung des Werkstücks bilden sich Ruß, Schmauch und unerwünschte Partikel, die am Werkstück anhaften oder in der vom Gehäuse umgebenen Kammer verbleiben. Zur Vermeidung und/oder Entfernung von solchen Partikeln werden im Stand der Technik Absaugeinrichtungen oder Schutzgas-Düsen zur Spülung verwendet. Bekannt sind beispielsweise variabel positionierbare Gasdüsen, die bei Laserschweißprozessen eingesetzt werden.

Aus DE 10 2006 040 784 A1 ist eine Laserstrahlbearbeitungsmaschine zum Laserbearbeiten eines Werkstücks bekannt, das Staubaustragsmittel zum Sammeln und Austragen von Staub, der durch die Aufbringung eines Laserstrahls auf das Werkstück gebildet wird, aufweist. Die Staubaustragsmittel umfassen eine Lufteintragskammer und eine Staubsammelkammer sowie Luftzufuhrmittel zum Zuführen von Luft zu der Lufteintragskammer. Weiter umfassen die Staubaustragsmittel Wirbelstrom-Generierungsmittel zum Generieren eines Wirbelstroms bzw. -flusses in der Staubsammelkammer. Die Lufteintragskammer und die Staubsammelkammer sind durch Abdeckglieder umgeben, die am unteren Ende eines Kondensors montiert sind, der zum Aufbringen des Laserstrahls auf das Werkstück dient.

Ein Gerät zur Laserbearbeitung mit einer Absaugvorrichtung offenbart die KR 102 139 282 B1. Die Absaugvorrichtung bringt dabei ein Schutzgas in Richtung desjenigen Bereichs der planen Oberfläche des Werkstücks ein, das mit dem Laser bearbeitet wird. Eine Saugvorrichtung saugt das Schutzgas und Substanzen ab, wobei eine Gasdüse tiefer in Richtung Werkstück als ein Saugrahmen mündet.

Der CN 108 581 195 B lässt sich ebenfalls ein Gerät zur Laserbearbeitung mit einer Absaugvorrichtung und einer Spülfunktion mit einem Schutzgas entnehmen. Das Schutzgas kann dabei aus unterschiedlichen Öffnungen auf der Innenseite eines Rings in Richtung eines mit dem Laser zu bearbeitenden Bereichs geblasen werden. Die Absaugöffnungen befinden sich an der Unterseite eines weiteren, den inneren Ring umgebenden Rings. Verwendung findet die Vorrichtung beim Schneiden eines LCD- oder OLED-Panels.

Eine Vorrichtung zum Trennen von Proben aus einem Probenträger mit einer Absaugvorrichtung offenbart die US 2018/0333806 A1. Rein optional ist ein Ventilator vorgesehen, um Luft zur Trennstelle zu bewegen. Die Absaugvorrichtung besteht aus zwei trichterartigen Komponenten die ober- bzw. unterhalb des Probenträgers derartig angeordnet sind, dass sie ihn nicht berühren, um Kontaminationen zu vermeiden.

Solche aus dem Stand der Technik bekannten Einrichtungen können zum Entfernen und/oder Absaugen von bei der Laserbearbeitung einer flachen Oberfläche entstehenden Partikeln dienen, sie sind jedoch für die Verwendung bei der Laserstrukturierung von innerhalb einer Kammer eines Werkstücks angeordneten Oberflächen, wie beispielsweise der Rückseite der Membran 3 des in Fig. 1 dargestellten Werkstücks 1, nicht gut geeignet, da herkömmliche, im Bereich der Laseroptik angeordnete Gasdüsen oder Absaugeinrichtungen nicht nahe genug an die zu strukturierenden Oberfläche herangeführt werden können und/oder voluminöse Gasdüsen die für die Bearbeitung der Membranrückseite verwendete Laserstrahlung abschatten. Mit herkömmlichen Mitteln können daher bei der Bearbeitung solcher Werkstücke nicht alle Verunreinigungen und störenden Partikel während der Laserbearbeitung verlässlich vermieden oder entfernt werden.

Es ist die Aufgabe der Erfindung eine Vorrichtung und ein Verfahren anzugeben, die eine verbesserte Gasspülung während der Laserbearbeitung eines Werkstücks mit einer zu bearbeitenden Oberfläche, die innerhalb einer mindestens auf einer Seite des Werkstücks offenen Kammer angeordnet ist, ermöglichen.

Diese Aufgabe wird gelöst durch einen Spülaufsatz mit den Merkmalen des ersten Anspruchs.

Indem in einem auf das Werkstück aufsetzbaren Spülaufsatz mindestens ein oder mehrere, Spülgas-Zufuhrkanäle mit Spülgas-Austrittsöffnungen und mindestens ein oder mehrere Spülgas-Absaugkanäle mit Spülgas-Eintrittsöffnungen angeordnet sind, die bei auf dem Werkstück aufgesetztem Spülaufsatz mit der Kammer innerhalb des Werkstücks kommunizieren, kann Spülgas in die Kammer eingeleitet und/oder aus der Kammer abgesaugt werden, ohne dass es durch die Wandung des Werkstücks zur Behinderung der Spülgas-Strömung kommt. Die Eintritts- und Austrittsöffnungen können außerdem so angeordnet werden, dass auch in Bereichen, an denen zwischen den Innenwänden der Kammern Kanten gebildet sind, eine Ansammlung von unerwünschten Partikeln und Verunreinigungen verhindert wird. Gleichzeitig ist der Aufbau kompakt, und erlaubt einen Durchtritt der Laserstrahlung für die Bearbeitung der Oberfläche durch die zentrale Öffnung, ohne dass Spül- oder Absaugdüsen den Laserstrahl abschatten.

In einer vorteilhaften Ausgestaltung können die Austrittsöffnung des mindestens einen Spülgas-Zufuhrkanals und die Eintrittsöffnung des mindestens einen Spülgas-Absaugkanals als Langlöcher ausgestaltet sein.

Der mindestens eine Spülgas-Zufuhrkanal kann eine innerhalb des Spülaufsatzes gebildete Kammer umfassen, die mit dem Anschluss für die Spülgas-Zuleitung und mit der Austrittsöffnung kommuniziert.

Gleichermaßen kann der mindestens eine Spülgas-Absaugkanal eine innerhalb des Spülaufsatzes gebildete Kammer umfassen, die mit dem Anschluss für die Spülgas-Ableitung und mit der Austrittsöffnung kommuniziert.

In einer weiteren, besonders vorteilhaften, Ausgestaltung weist der Spülaufsatz zwei durch den Spülaufsatz verlaufende Spülgas-Zufuhrkanäle und zwei durch den Spülaufsatz verlaufende Spülgas-Absaugkanäle auf, wobei die Spülgas-Zufuhrkanäle jeweils an einem ersten Ende einen Anschluss für eine Spülgas-Zuleitung und an einem zweiten Ende eine Austrittsöffnung aufweisen, wobei die Spülgas-Absaugkanäle, jeweils an einem ersten Ende einen Anschluss für eine Spülgas-Ableitung und an einem zweiten Ende eine Eintrittsöffnung aufweisen, und wobei jeweils ein Spülgas-Absaugkanal und ein Spülgas-Zufuhrkanal auf einander gegenüberliegenden Seite Seiten der zentralen Öffnung angeordnet sind, d.h. die Eintrittsöffnung und die Austrittsöffnung liegen einander derart gegenüber, dass die zentrale Öffnung des Spülaufsatzes zwischen der Eintrittsöffnung und der Austrittsöffnung angeordnet ist.

Der Spülaufsatz kann in dieser Ausgestaltung vier, beispielsweise gleich große, Kammern aufweisen, die durch Zwischenwände voneinander getrennt sind. Die Kammern können ringförmig um die zentrale Öffnung herum angeordnet sein. Zwei der Kammern bilden jeweils einen Bestandteil eines Spülgas-Zufuhrkanals und kommunizieren in dieser Ausgestaltung mit einem Anschluss für eine Spülgas-Zuleitung und mit einer Austrittsöffnung. Die beiden anderen Kammern bilden jeweils einen Bestandteil eines Spülgas-Absaugkanals und kommunizieren in dieser Ausgestaltung mit einem Anschluss für eine Spülgas-Ableitung und einer Eintrittsöffnung. Die Kammern können jeweils mit einer Austrittsöffnung oder einer Eintrittsöffnung kommunizieren, wobei jeweils eine Austrittsöffnung und eine Eintrittsöffnung auf einander gegenüberliegenden Seiten der zentralen Öffnung angeordnet sind.

Die Anschlüsse der Spülgas-Zufuhrkanäle für eine Spülgas-Zuleitung können einen Druckluftadapter umfassen. Die Anschlüsse der Spülgas-Absaugkanäle können ebenfalls einen Druckluftadapter umfassen. Über die Druckluftadapter können Kanäle wahlweise mit einem Gas-Überdruck, z.B. mit Luft, oder einem inerten Schutzgas wie Argon oder Stickstoff, oder wahlweise mit einem Unterdruck zum Absaugen von Gas beaufschlagt werden. Ist ein Kanal mit einem Gas-Überdruck beaufschlagt, handelt es sich also um einen Spülgas-Zufuhrkanal, ist er mit einem Unterdruck beaufschlagt, handelt es sich um einen Spülgas-Absaugkanal
Vorteilhaft kann der Spülaufsatz ringförmig, d.h. zylindersymmetrisch bezüglich einer senkrecht zu der zentralen Öffnung verlaufenden Längsachse oder Zylinderachse, ausgestaltet sein. In dieser Ausgestaltung kann der Spülaufsatz vier gleich große, kreisringsegmentförmige Kammern umfassen, wobei jede der Kammern mit einer Eintrittsöffnung oder einer Austrittsöffnung kommuniziert. Die Eintrittsöffnungen und die Austrittsöffnungen sind in dieser Ausgestaltung vorteilhaft als Langlöcher ausgebildet, deren Querschnitt im Wesentlichen die Form eines Kreisringsegments aufweist. Die kreisringsegmentförmigen Bögen der Kammern und der Langlöcher können konzentrisch bezüglich der Zylinderachse der zentralen Öffnung angeordnet sein. Entsprechend kann ein gedachter, durch die Querschnitte aller Langlöcher verlaufender Kreisring in dieser Ausgestaltung konzentrisch zur zentralen Öffnung verlaufen. Gleichermaßen kann ein gedachter, durch die kreisringsegmentförmigen Kammern in einer Ebene senkrecht zur Zylinderachse der zentralen Öffnung verlaufender Kreisring konzentrisch zur zentralen Öffnung verlaufen. Diese Ausgestaltung des Spülaufsatzes ist vorteilhaft für die Bearbeitung einer Innenfläche einer zylindrischen Gehäusekammer eines Werkstücks.

Indem erfindungsgemäß die Austrittsöffnungen aller Spülgas-Zufuhrkanäle und die Eintrittsöffnungen aller Spülgas-Absaugkanäle in dem radialen Absatz angeordnet sind, sind auf diese Weise die Austrittsöffnungen und Eintrittsöffnungen in platzsparender Weise so angeordnet, dass die sich zwischen Austrittsöffnungen und Eintrittsöffnungen ausbildende Fluidströmung die Kammer des Werkstücks durchströmt, wenn der Spülaufsatz auf dem Werkstück aufgesetzt ist.

Die Aufgabe wird gelöst durch das Verfahren mit den Merkmalen des vierten Anspruchs.

Das erfindungsgemäße Verfahren eignet sich insbesondere zur Bearbeitung eines Werkstücks für die Fertigung eines Sensors zur Ermittlung einer Prozessgröße, z.B. eines Füllstands oder Grenzstands eines Mediums in einem Behälter oder zur Ermittlung einer Dichte oder Viskosität eines Mediums, wie dem in Fig. 1 dargestellten Werkstück.

Ein Verfahren zur Herstellung eines Sensors zur Ermittlung mindestens einer Prozessgröße eines Mediums in einem Behälter kann daher die folgenden Schritte umfassen:
- Aufrauen einer Rückseite einer Membran einer schwingfähigen Einheit, die mindestens die Membran und mindestens ein an einer der Rückseite der Membran gegenüberliegenden Vorderseite der Membran angeordnetes Schwingelement aufweist, mittels des Verfahrens nach dem voranstehend beschriebenen Verfahren;
- Ankleben einer Antriebs- und Empfangseinheit, die dazu eingerichtet ist, die mechanisch schwingfähige Einheit mittels eines elektrischen Anregungssignals mit einer Anregungsfrequenz zu Schwingungen im der Anregungsfrequenz entsprechenden Schwingungsmodus anzuregen und die mechanischen Schwingungen von der schwingfähigen Einheit zu empfangen und in ein elektrisches Empfangssignal zu wandeln an die aufgeraute Rückseite der Membran; und
- Verbinden der Antriebs- und Empfangseinheit mit einer Elektronikeinheit, derart, dass die Elektronikeinheit und die Antriebs- und Empfangseinheit zusammenwirken um ausgehend vom Empfangssignal das Anregungssignal zu erzeugen, und aus dem Empfangssignal die Prozessgröße zu ermitteln.

Die Erfindung wird im Folgenden anhand der in den Figuren dargestellten Ausführungsbeispiele beschrieben. Dabei bezeichnen gleiche Bezugszeichen gleiche Komponenten der in den Figuren gezeigten Bauteile. Es zeigen:
- Fig. 1: eine schematische Längsschnitt-Darstellung eines Werkstücks mit einer innerhalb einer einseitig offenen Kammer angeordneten, mittels Laserstrahlung zu bearbeitenden Oberfläche;
- Fig. 2: eine schematische Längsschnitt-Darstellung einer Anordnung zur Bearbeitung einer Oberfläche des in Fig. 1 dargestellten Werkstücks mittels Laserstrahlung und zur gleichzeitigen Absaugung von Partikeln und Verunreinigungen mit einem Spülaufsatz; und
- Fig. 3: eine schematische Querschnitt-Darstellung des in Fig. 2 dargestellten Spülaufsatzes.

Die Laserbearbeitung zum Aufrauen einer in einer Kammer innerhalb eines Werkstücks liegenden Oberfläche wird im Folgenden anhand der Bearbeitung der Rückseite einer Membran in einem zur Herstellung eines Bauteils für einen Sensor, wie es in der eingangs beschriebenen Fig. 1 dargestellt ist, beschrieben. Die Erfindung ist jedoch auf eine Vielzahl anderer Werkstücke übertragbar, die eine zu bearbeitende Oberfläche aufweisen, die in einer nach mindestens einer Seite offenen Vertiefung oder Kammer angeordnet ist.

In Fig. 2 ist schematisch eine Anordnung zur Laserstrukturierung der Rückseite der Membran 3 des in Fig. 1 dargestellten Werkstücks 1 dargestellt. Auf die offene Seite des Gehäuses 4 des Werkstücks ist ein Spülaufsatz 5 aufgesetzt, der eine zentrale Öffnung 6 aufweist. Der Spülaufsatz 5 ist im Wesentlichen ringförmig, d.h. er weist eine Zylindersymmetrie bezüglich einer gedachten Zylindersymmetrieachse oder Zylinderachse Z auf. Durch die zentrale Öffnung 6 kann Laserstrahlung von der nur schematisch angedeuteten Laseroptik 7 einer Laserbearbeitungsmaschine zur zu bearbeitenden Oberfläche 8 der Membran 3 gelangen um diese zu strukturieren bzw. aufzurauen.

Der Spülaufsatz 5 weist für die Spülung der von dem Werkstück 1 eingeschlossenen Kammer 10 mit Schutzgas, z.B. Argon oder Stickstoff, jeweils zwei Spülgas-Zufuhrkanäle 11 und zwei Spülgas-Absaugkanäle 12 auf. Grundsätzlich ist auch eine höhere Anzahl von Spülgas-Zufuhrkanälen und Spülgas-Absaugkanälen möglich, jedoch hat sich gezeigt, dass eine Anzahl von jeweils zwei Spülgas-Zufuhrkanälen und Spülgas-Absaugkanälen für die spezielle Geometrie des im hier beschriebenen Beispiel verwendeten Werkstücks 1 besonders gut geeignet ist.

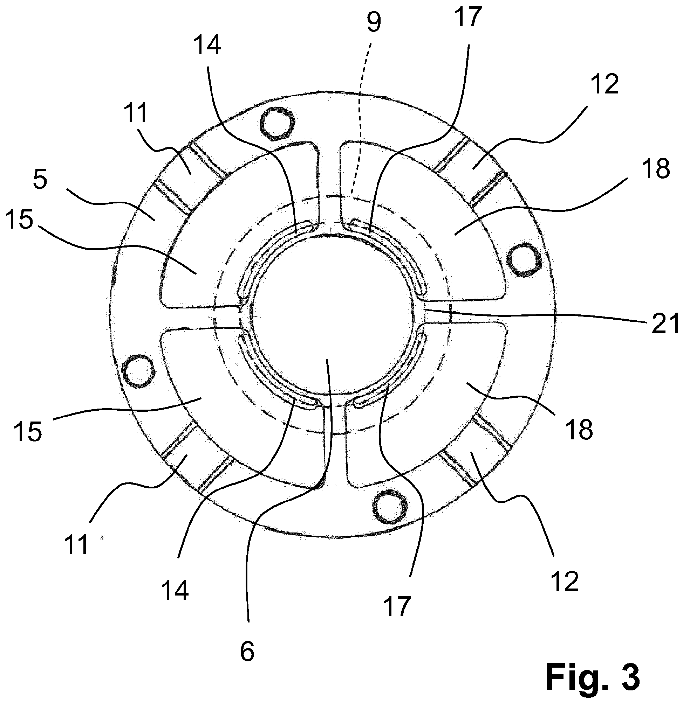

In der Längsschnitt-Darstellung der Fig. 2 ist nur ein Spülgas-Zufuhrkanal 11 und ein auf der gegenüberliegenden Seite der zentralen Öffnung 6 angeordneter Spülgas-Absaugkanal 12 zu sehen. Der Spülgas-Zufuhrkanal 11 weist an seinem ersten Ende einen Anschluss 13 in Form eines Druckluftadapters auf. An seinem zweiten Ende weist der Spülgas-Zufuhrkanal 11 eine Austrittsöffnung 14 auf, die in die Kammer 10 mündet. Weiter weist der Spülgas-Zufuhrkanal 11 eine Kammer 15 auf, die mit dem Anschluss 13 und der Austrittsöffnung 14 kommuniziert. Auf die Form und Funktion der Kammer 15 und der Austrittsöffnung 14 wird weiter unten im Zusammenhang mit Fig. 3 noch genauer eingegangen.

Der Spülgas-Absaugkanal 12 ist hinsichtlich seiner Geometrie ganz identisch ausgestaltet wie der Spülgas-Zufuhrkanal 11. Er weist an einem ersten Ende ebenfalls einen Anschluss 16 auf, der als Druckluftadapter ausgestaltet sein kann. An seinem zweiten Ende weist der Spülgas-Absaugkanal 12 eine Eintrittsöffnung 17 auf. Weiter umfasst der Spülgas-Absaugkanal 12 eine Kammer 18, die mit dem Anschluss 16 und der Eintrittsöffnung 17 kommuniziert.

Die zentrale Öffnung 6 des Spülaufsatzes 5 weist einen ersten Abschnitt mit einem ersten Durchmesser und einen daran anschließenden zweiten Abschnitt mit einem zweiten Durchmesser auf, wobei der zweite Durchmesser größer ist als der erste Durchmesser. Am Übergang vom ersten zum zweiten Abschnitt ist infolge der sprunghaften Aufweitung der zentralen Öffnung 6 vom ersten zum zweiten Durchmesser ein radialer Absatz 9 gebildet, der eine der zu bearbeitenden Oberfläche 8 zugewandte Kreisringfläche aufweist. Diese dient als Anschlagfläche für die Rückseite des Gehäuses 4 des Werkstücks 1, wenn der Spülaufsatz 5 auf das Werkstück 1 aufgesetzt ist.

Der zweite Durchmesser der zentralen Öffnung 6 in ihrem zweiten Abschnitt ist an den Außendurchmesser des zylindrischen Gehäuses 4 so angepasst, dass die Außenwand des Gehäuses 4 gegen die die zentrale Öffnung 6 umgebende, zylindrische Wand des Spülaufsatzes 5 anliegt, wenn der Spülaufsatz 5 auf das Gehäuse 4 aufgesetzt ist. Der zweite Abschnitt der zentralen Öffnung 6 bildet auf diese Weise einen Zentrierabschnitt des Spülaufsatzes 5, der dazu dient, das Werkstück 1 bezüglich der Zylinderachse Z des Spülaufsatzes 5 zu zentrieren, so dass die Zylindersymmetrieachse des rohrförmigen Gehäuses 4 mit der Zylinderachse Z zusammenfällt.

Die Austrittsöffnung 14 des Spülgas-Zufuhrkanals 11 und die Eintrittsöffnung 17 des Spülgas-Absaugkanals 12 sind in dem radialen Absatz 9 angeordnet, und zwar in einem Bereich der Kreisringfläche des radialen Absatzes 9, der bei in dem als Zentrierabschnitt des Spülaufsatzes 5 dienenden zweiten Abschnitt der zentralen Öffnung 6 aufgenommenem Werkstück 1 nicht von der Wandung des Gehäuses 4 überdeckt wird, so dass die Eintritts- und Austrittsöffnungen 14, 17 mit der von dem Gehäuse 4 umgebenen, zum Spülaufsatz 5 hin offenen Kammer 10 kommunizieren. Zu diesem Zweck sind alle Eintritts- und Austrittsöffnungen 14, 17 in einem Abstand von der zylindrischen Innenwand des zweiten Abschnitts der zentralen Öffnung 6 angeordnet, der größer ist als die Wandstärke des darin aufzunehmenden hohlzylindrischen Gehäuseabschnitts des Werkstücks 1. Indem das Werkstück 1 bezüglich der zentralen Öffnung 6 mittels des Zentrierabschnitts des Spülaufsatzes 5 so zentriert wird, dass die Zylinderachsen des rohrförmigen Gehäuses 4 und der zentralen Öffnung 6 zusammenfallen, sind auch die Eintrittsöffnungen und die Austrittsöffnungen des Spülaufsatzes 5 so angeordnet, dass sie zwangsläufig in die Kammer 10 münden und nicht von der Gehäusewand des Gehäuses 4 abgedeckt werden.

Der Spülgas-Zufuhrkanal 11 dient zum Einblasen des Spülgases in die Kammer 10. Hierzu kann der Anschluss 13 mit einer Spülgasquelle, z.B. einer Druckluftleitung oder einer Gasflasche, verbunden und mit Schutzgas beaufschlagt werden. Mit dem Pfeil 18 ist in Fig. 2 die Richtung des in die Kammer 10 einströmenden Gases angedeutet. Der gegenüberliegende Spülgas-Absaugkanal 12 dient zum Absaugen von Gas aus der Kammer 10, was durch den Pfeil 20 in Fig. 2 angedeutet ist. Hierzu kann der Anschluss 16 mit Unterdruck beaufschlagt werden, z.B. mittels einer Pumpe. Das Einblasen und Absaugen von Spülgas kann abwechselnd und/oder gleichzeitig erfolgen. Es kann vorteilhaft gleichzeitig mit der Bearbeitung der Oberfläche 8 mittels des Lasers erfolgen.

In Fig. 3 ist ein Querschnitt senkrecht zur Achse Z durch den Spülaufsatz 5 auf der Höhe der Kammern 15 und 18 dargestellt. Zu erkennen sind jeweils zwei Spülgas-Zufuhrkanäle 11 und zwei Spülgas-Absaugkanäle 12, wobei jeweils ein Spülgas-Zufuhrkanal 11 und ein Spülgas-Absaugkanal 12 einander gegenüberliegen. Jeder Spülgas-Zufuhrkanal 11 weist an seinem ersten Ende einen (in Fig. 3 nicht dargestellten) Anschluss für eine Spülgas-Zuleitung auf. Entsprechend weist auch jeder Spülgas-Absaugkanal 12 einen (ebenfalls in Fig. 3 nicht dargestellten) Anschluss für eine Spülgas-Ableitung auf. Die Spülgas-Zufuhrkanäle 11 und die Spülgas-Absaugkanäle 12 umfassen jeweils eine ringsegmentförmige Kammer 15 und 18. Die Kammern 15, 18 sind voneinander durch Zwischenwände getrennt und ringförmig um die zentrale Öffnung 6 des Spülaufsatzes 5 herum angeordnet. An ihrem zum als Zentrierabschnitt für das Werkstück dienenden zweiten Abschnitt der zentralen Öffnung 6 zugewandten Boden weisen die Kammern 15, 18 jeweils ein Langloch auf, das einen ringsegmentförmigen Querschnitt aufweist. Diese Langlöcher bilden die Austrittsöffnungen 14 der Spülgas-Zufuhrkanäle 11 und die Eintrittsöffnungen 17 der Spülgas-Absaugkanäle 12. Die Langlöcher sind entlang einer gedachten Kreislinie 21 angeordnet, deren Mittelpunkt auf der Zylinderachse Z der zentralen Öffnung 6 des Spülaufsatzes 5 liegt. Sie sind in dem in Fig. 3 gestrichelt dargestellten radialen Absatz 9 angeordnet, der durch die stufenförmige Querschnittsaufweitung der zentralen Öffnung 6 zwischen ihrem ersten und dem zweiten Abschnitt gebildet wird.

Es hat sich in Experimenten gezeigt, dass die ringsegmentförmige Ausgestaltung der Kammern 15 und 18 sowie die Ausgestaltung der Eintritts- und Austrittsöffnungen 14, 17 als Langlöcher eine für die Reinigungswirkung der Kammer 10 und insbesondere der rückseitigen Oberfläche 8 der Membran 3 besonders günstige Spülgas-Strömung bewirkt. Das zuströmende Gas (Fig. 2, Pfeil 19) strömt in dieser Anordnung weitgehend entlang der inneren Rohrwandung des Gehäuses 4, und gelangt somit zielgerichtet zur zu bearbeitenden Oberfläche 8. Entsprechend wird das Gas auch zielgerichtet an der gegenüberliegenden Seite der Rohrwandung des Gehäuses 4 wieder abgesaugt.

Im vorliegenden Ausführungsbeispiel ist der Spülaufsatz 5 aus einem Metall oder einer Metalllegierung, z.B. aus Aluminium oder einem Edelstahl, gebildet. Er kann alternativ auch aus einem anderen Material, z.B. einem Kunststoff, insbesondere einem Polymer, gebildet sein. Er kann aus zwei Teilen, nämlich einem Grundkörper und einem Deckelteil, zusammengesetzt sein. In der Wandung des Spülaufsatzes sind in Fig. 3 Bohrungen zu sehen, in die Befestigungsmittel, z.B. Schrauben, für ein solches Deckelteil des Spülaufsatzes eingeführt werden können.

Zum Strukturieren, z.B. Aufrauen, der Oberfläche 8, die die Rückseite der Membran 3 bildet, kann in an sich bekannter Weise gepulste Laserstrahlung von der Laseroptik 7 in Richtung der Zylinderachse Z bzw. in einem spitzen Winkel zu dieser Achse eingestrahlt werden. Beim Bestrahlen entstehende Ruß- oder Schmauch-Partikel oder sonstige unerwünschte Partikel werden gleichzeitig durch Zuführung von Spülgas über die Austrittsöffnungen 14 und Absaugen von Gas über die Eintrittsöffnungen 17 entfernt. Das Verfahren kann insbesondere automatisiert mittels einer elektronisch gesteuerten Laserbearbeitungsmaschine durchgeführt werden, die weiter dazu eingerichtet ist, das Zuleiten und Absaugen von Gas über die Anschlüsse 13 und 16 des Spülaufsatzes 5 zu steuern.

Zur Herstellung eines Sensors zur Ermittlung einer Prozessgröße wie eines Füllstands eines Mediums in einem Behälter, einer Dichte oder einer Viskosität, kann die Rückseite einer Membran einer schwingfähigen Einheit, die zusätzlich zu der Membran mindestens ein an der Vorderseite der Membran angeordnetes Schwingelement, z.B. eine Schwinggabel oder einen einzelnen schwingfähigen Stab, aufweist, nach dem beschriebenen Verfahren aufgeraut werden. Anschließend kann eine Antriebs- und Empfangseinheit, die z.B. eine elektromechanische Wandlereinheit, wie z.B. einen piezoelektrischen Antrieb oder einen elektromagnetischen Antrieb umfasst, an die aufgeraute Rückseite der Membran aufgeklebt werden. Zur Herstellung des Sensors kann die Antriebs- und Empfangseinheit weiter mit einer Elektronikeinheit verbunden werden, derart, dass die Elektronikeinheit und die Antriebs- und Empfangseinheit zusammenwirken können, um die schwingfähige Einheit zu Schwingungen anzuregen oder um mechanische Schwingungen von der schwingfähigen Einheit zu empfangen und in ein elektrisches Signal zu wandeln.

Eine Vielzahl weiterer Abwandlungen der hier beschriebenen Erfindung sind denkbar. Beispielsweise kann der Spülgas-Aufsatz eine höhere oder niedrigere Anzahl von Spülgas-Zufuhr- und AbsaugKanälen aufweisen.

## Patentansprüche

1. Spülaufsatz (5) für ein Werkstück (1) mit einer mittels Laserstrahlung zu bearbeitenden Oberfläche (8),
wobei das Werkstück (1) eine an mindestens einer Seite des Werkstücks (1) offene Kammer (10) aufweist, und
wobei die zu bearbeitende Oberfläche (8) eine innerhalb der Kammer (10) angeordnete Oberfläche ist, umfassend:
eine durch den Spülaufsatz (5) durchgehende zentrale Öffnung (6);
mindestens einen durch den Spülaufsatz (5) verlaufenden Spülgas-Zufuhrkanal (11),
der an einem ersten Ende einen Anschluss (13) für eine Spülgas-Zuleitung und an einem zweiten Ende eine Austrittsöffnung (14) aufweist;
mindestens einen durch den Spülaufsatz (5) verlaufenden Spülgas-Absaugkanal (12),
der an einem ersten Ende einen Anschluss (16) für eine Spülgas-Ableitung und an einem zweiten Ende eine Eintrittsöffnung (17) aufweist, und
wobei die Austrittsöffnung (14) des mindestens einen Spülgas-Zufuhrkanals (11) und die Eintrittsöffnung des mindestens einen Spülgas-Absaugkanals (12) auf einander gegenüberliegenden Seiten der zentralen Öffnung (6) angeordnet sind; und
mindestens einen Zentrierabschnitt,
der dazu eingerichtet ist, mit einem an der Seite des Werkstücks (1) angeordneten Zentrierbereich des Werkstücks (1) so zusammenzuwirken, dass die zentrale Öffnung (6), die Austrittsöffnung (14) und die Eintrittsöffnung (17) mit der Kammer (10) kommunizieren,
wobei der Zentrierabschnitt eine um eine Längsachse (Z) der zentralen Öffnung (6) umlaufende Zylinderfläche aufweist,
die dazu bestimmt ist, gegen eine Anlegefläche des Werkstücks (1), welche dem Zentrierbereich des Werkstücks (1) entspricht, anzuliegen,
um das Werkstück (1) bezüglich der zentralen Öffnung (6) des Spülaufsatzes (5) zu zentrieren,
**dadurch gekennzeichnet,**
**dass** die zentrale Öffnung (6) des Spülaufsatzes (5) einen ersten zylindersymmetrischen Abschnitt mit einem ersten Querschnitt und einen koaxial hinter dem ersten zylindersymmetrischen Abschnitt angeordneten zweiten zylindrischen Abschnitt mit einem zweiten Querschnitt aufweist,
wobei am Übergang vom ersten Abschnitt zum zweiten Abschnitt ein radialer Absatz (9) gebildet ist,
der eine Anschlagfläche für das Werkstück (1) bildet, wenn der Spülaufsatz (5) auf das Werkstück (1) aufgesetzt ist, und
**dass** die Austrittsöffnungen (14) aller Spülgas-Zufuhrkanäle (11) und die Eintrittsöffnungen (17) aller Spülgas-Absaugkanäle (12) in dem radialen Absatz (9) angeordnet sind.

2. Spülaufsatz (5) nach Anspruch 1,
wobei der mindestens eine Spülgas-Zufuhrkanal (11) eine innerhalb des Spülaufsatzes (5) gebildete Kammer umfasst,
die mit dem Anschluss (13) für die Spülgas-Zuleitung und mit der Eintrittsöffnung (14) kommuniziert, und
wobei der mindestens eine Spülgas-Absaugkanal (12) eine innerhalb des Spülaufsatzes (5) gebildete Kammer (18) umfasst,
die mit dem Anschluss (16) für die Spülgas-Ableitung und mit der Austrittsöffnung (17) kommuniziert.

3. Spülaufsatz (5) nach Anspruch 1 oder 2,
wobei der Spülaufsatz (5) zwei durch den Spülaufsatz (5) verlaufende Spülgas-Zufuhrkanäle (11) und zwei durch den Spülaufsatz (5) verlaufende Spülgas-Absaugkanäle (12) aufweist,
wobei die Spülgas-Zufuhrkanäle (11) jeweils an einem ersten Ende einen Anschluss (13) für eine Spülgas-Zuleitung und an einem zweiten Ende eine Austrittsöffnung (14) aufweisen,
wobei die Spülgas-Absaugkanäle (12) jeweils an einem ersten Ende einen Anschluss (16) für eine Spülgas-Ableitung und an einem zweiten Ende eine Eintrittsöffnung (17) aufweisen, und
wobei jeweils ein Spülgas-Absaugkanal (11) und ein Spülgas-Zufuhrkanal (12) auf einander gegenüberliegenden Seiten der zentralen Öffnung (6) angeordnet sind.

4. Verfahren zur Bearbeitung einer Oberfläche (8) eines Werkstücks (1) mittels Laser und mit einem Spülaufsatz (5) für eine Gasspülung während der Laserbearbeitung,
wobei der Spülaufsatz (5) eine durchgehende zentrale Öffnung (6), mindestens einen durch den Spülaufsatz (5) verlaufenden Spülgas-Zufuhrkanal (11), mindestens einen durch den Spülaufsatz (5) verlaufenden Spülgas-Absaugkanal (12), und mindestens einen Zentrierabschnitt aufweist,
wobei der mindestens eine Spülgas-Zufuhrkanal (11) an einem ersten Ende einen Anschluss (13) für eine Spülgas-Zuleitung und an einem zweiten Ende eine Austrittsöffnung (14) aufweist,
wobei der mindestens eine Spülgas-Absaugkanal (12) an einem ersten Ende einen Anschluss (16) für eine Spülgas-Ableitung und an einem zweiten Ende eine Eintrittsöffnung (17) aufweist, und
wobei die Austrittsöffnung (14) des mindestens einen Spülgas-Zufuhrkanals (11) und die Eintrittsöffnung des mindestens einen Spülgas-Absaugkanals (12) auf einander gegenüberliegenden Seiten der zentralen Öffnung (6) angeordnet sind,
wobei das Verfahren umfasst:
- Aufsetzen des Spülaufsatzes (5) auf das Werkstück (1), wobei das Werkstück (1) eine an mindestens einer ersten Seite des Werkstücks (1) offene Kammer (10) aufweist, derart, dass der Zentrierabschnitt des Spülaufsatzes (5) mit einem an der offenen Seite des Werkstücks (1) angeordneten Zentrierbereich des Werkstücks (1) so zusammenwirkt, dass die zentrale Öffnung (6) des Spülaufsatzes (5), die Austrittsöffnung (14) des mindestens einen Spülgas-Zufuhrkanals (11) und die Eintrittsöffnung (17) des mindestens einen Spülgas-Absaugkanals (12) des Spülaufsatzes (5) mit der Kammer (10) kommunizieren,
- Zuführen von Gas in die Kammer (10) durch die Austrittsöffnung (14) des mindestens einen Spülgas-Zufuhrkanals (11) und Absaugen von Gas durch die Eintrittsöffnung (17) des mindestens einen Spülgas-Absaugkanals (12); und
- während des Zuführens von Gas in die Kammer (10) und während des Absaugens von Gas Einstrahlen von Laserstrahlung durch die zentrale Öffnung (6) des Spülaufsatzes (5) hindurch auf eine innerhalb der Kammer (10) angeordnete Oberfläche (8) des Werkstücks (1) und Bearbeiten der Oberfläche (8) des Werkstücks (1), insbesondere Aufrauen der Oberfläche (8), mit der Laserstrahlung.

5. Verfahren zur Herstellung eines Sensors zur Ermittlung mindestens einer Prozessgröße eines Mediums in einem Behälter umfassend:
- Aufrauen einer Rückseite einer Membran (3) einer schwingfähigen Einheit, die mindestens die Membran (3) und mindestens ein an einer der Rückseite der Membran (3) gegenüberliegenden Vorderseite der Membran (3) angeordnetes Schwingelement (4) aufweist, mittels des Verfahrens nach Anspruch 4;
- Ankleben einer Antriebs- und Empfangseinheit, die dazu eingerichtet ist, die mechanisch schwingfähige Einheit mittels eines elektrischen Anregungssignals mit einer Anregungsfrequenz zu Schwingungen im der Anregungsfrequenz entsprechenden Schwingungsmodus anzuregen und die mechanischen Schwingungen von der schwingfähigen Einheit zu empfangen und in ein elektrisches Empfangssignal zu wandeln an die aufgeraute Rückseite der Membran (3); und
- Verbinden der Antriebs- und Empfangseinheit mit einer Elektronikeinheit, derart, dass die Elektronikeinheit und die Antriebs- und Empfangseinheit zusammenwirken um ausgehend vom Empfangssignal das Anregungssignal zu erzeugen, und aus dem Empfangssignal die Prozessgröße zu ermitteln.

## Claims

1. A flushing attachment (5) for a workpiece (1) with a surface (8) to be machined using laser irradiation,
wherein the workpiece (1) has a chamber (10) that is open on at least one side of the workpiece (1), and
wherein the surface (8) to be machined is a surface arranged inside the chamber (10), comprising:
A central opening (6) running through the flushing attachment (5);
at least one flushing gas supply channel (11) running through the flushing attachment (5),
which has a connection (13) for a flushing gas supply line at a first end and an outlet opening (14) at a second end;
at least one flushing gas extraction channel (12) running through the flushing attachment (5),
which has a connection (16) for a flushing gas extraction line at a first end and an inlet opening (17) at a second end, and
wherein the outlet opening (14) of the at least one flushing gas supply channel (11) and the inlet opening of the at least one flushing gas extraction channel (12) are arranged on opposite sides of the central opening (6); and
at least one centering section,
which is configured to work with a centering area of the workpiece (1) arranged on the side of the workpiece (1) in such a way that the central opening (6), the outlet opening (14) and the inlet opening (17) communicate with the chamber (10),
wherein the centering section has a cylindrical surface surrounding a longitudinal axis (Z) of the central opening (6),
which is intended to rest against a contact surface of the workpiece (1) corresponding to the centering area of the workpiece (1)
in order to center the workpiece (1) relative to the central opening (6) of the flushing attachment (5),
**characterized in that**
the central opening (6) of the flushing attachment (5) has a first cylindrically symmetrical section with a first cross-section and a second cylindrical section arranged coaxially behind the first cylindrically symmetrical section with a second cross-section,
wherein a radial step (9) is formed at the transition from the first section to the second section,
which forms a stop surface for the workpiece (1) when the flushing attachment (5) is attached to the workpiece (1), and
the outlet openings (14) of all flushing gas supply channels (11) and the inlet openings (17) of all flushing gas extraction channels (12) are arranged in the radial step (9).

2. The flushing attachment (5) as claimed in claim 1,
wherein the at least one flushing gas supply channel (11) comprises a chamber formed inside the flushing attachment (5),
which communicates with the connection (13) for the flushing gas supply line and with the inlet opening (14), and
wherein the at least one flushing gas extraction channel (12) comprises a chamber (18) formed inside the flushing attachment (5),
which communicates with the connection (16) for the flushing gas extraction line and with the outlet opening (17).

3. The flushing attachment (5) as claimed in claim 1 or 2,
wherein the flushing attachment (5) has two flushing gas supply channels (11) running through the flushing attachment (5) and two flushing gas extraction channels (12) running through the flushing attachment (5),
wherein the flushing gas supply channels (11) each have a connection (13) for a flushing gas supply line at a first end and an outlet opening (14) at a second end,
wherein the flushing gas extraction channels (12) each have a connection (16) for a flushing gas extraction line at a first end and an inlet opening (17) at a second end, and
wherein one flushing gas extraction channel (11) and one flushing gas supply channel (12) are in each case arranged on opposite sides of the central opening (6).

4. A method for machining a surface (8) of a workpiece (1) using a laser and with a flushing attachment (5) for gas flushing during laser machining,
wherein the flushing attachment (5) has a continuous central opening (6), at least one flushing gas supply channel (11) running through the flushing attachment (5), at least one flushing gas extraction channel (12) running through the flushing attachment (5) and at least one centering section,
wherein the at least one flushing gas supply channel (11) has a connection (13) for a flushing gas supply line at a first end and an outlet opening (14) at a second end,
wherein the at least one flushing gas extraction channel (12) has a connection (16) for a flushing gas extraction line at a first end and an inlet opening (17) at a second end, and
wherein the outlet opening (14) of the at least one flushing gas supply channel (11) and the inlet opening of the at least one flushing gas extraction channel (12) are arranged on opposite sides of the central opening (6),
wherein the method comprises:
- Attaching the flushing attachment (5) to the workpiece (1), wherein the workpiece (1) has a chamber (10) that is open on at least a first side of the workpiece (1) in such a way that the centering section of the flushing attachment (5) works together with a centering area of the workpiece (1) arranged on the open side of the workpiece (1) so that the central opening (6) of the flushing attachment (5), the outlet opening (14) of the at least one flushing gas supply channel (11) and the inlet opening (17) of the at least one flushing gas extraction channel (12) of the flushing attachment (5) communicate with the chamber (10),
- supplying gas into the chamber (10) through the outlet opening (14) of the at least one flushing gas supply channel (11) and extracting gas through the inlet opening (17) of the at least one flushing gas extraction channel (12); and
- while gas is being fed into the chamber (10) and while gas is being extracted, shining laser irradiation in through the central opening (6) of the flushing attachment (5) onto a surface (8) of the workpiece (1) arranged inside the chamber (10) and machining the surface (8) of the workpiece (1), in particular roughening the surface (8), with the laser irradiation.

5. A method for producing a sensor in order to determine at least one process variable of a medium in a container, comprising:
- Roughening a rear surface of a membrane (3) of a unit capable of oscillating, which has at least the membrane (3) and at least one oscillating element (4) arranged on a front surface of the membrane (3) opposite the rear surface of the membrane (3), by means of the method as claimed in claim 4;
- adhering a drive and receiver unit, which is configured to cause the unit capable of mechanical oscillations to oscillate in the oscillation mode corresponding to the excitation frequency using an electrical excitation signal, and to receive the mechanical oscillations from the unit capable of oscillating, and to convert these into an electrical received signal at the roughened rear surface of the membrane (3); and
- connecting the drive and receiver unit to an electronic unit in such a way that the electronic unit and the drive and receiver unit work together to generate the excitation signal based on the received signal and to determine the process variable from the received signal.

## Revendications

1. Dispositif de rinçage (5) pour une pièce (1) comportant une surface à traiter (8) au moyen d'un rayonnement laser,
la pièce (1) comportant une chambre (10) ouverte sur au moins un côté de la pièce (1) et
la surface à traiter (8) étant une surface disposée à l'intérieur de la chambre (10),
lequel dispositif comprend :
une ouverture centrale (6) traversant le dispositif de rinçage (5) ;
au moins un canal d'alimentation en gaz de rinçage (11) s'étendant à travers le dispositif de rinçage (5),
lequel canal présente, à une première extrémité, un raccord (13) pour une conduite d'alimentation en gaz de rinçage et, à une deuxième extrémité, une ouverture de sortie (14) ;
au moins un canal d'aspiration de gaz de rinçage (12) s'étendant à travers le dispositif de rinçage (5),
lequel canal présente, à une première extrémité, un raccord (16) pour une conduite d'évacuation de gaz de rinçage et, à une deuxième extrémité, une ouverture d'entrée (17), et
l'ouverture de sortie (14) de l'au moins un canal d'alimentation en gaz de rinçage (11) et l'ouverture d'entrée de l'au moins un canal d'aspiration de gaz de rinçage (12) étant disposées sur des côtés opposés de l'ouverture centrale (6) ; et
au moins une section de centrage,
laquelle section est conçue pour interagir avec une zone de centrage de la pièce (1) disposée sur le côté de la pièce (1) de telle sorte que l'ouverture centrale (6), l'ouverture de sortie (14) et l'ouverture d'entrée (17) communiquent avec la chambre (10),
la section de centrage présentant une surface cylindrique tournant autour d'un axe longitudinal (Z) de l'ouverture centrale (6),
laquelle surface de centrage est destinée à s'appuyer contre une surface d'appui de la pièce (1), laquelle surface d'appui correspond à la zone de centrage de la pièce (1),
afin de centrer la pièce (1) par rapport à l'ouverture centrale (6) du dispositif de rinçage (5),
**caractérisé**
**en ce que** l'ouverture centrale (6) du dispositif de rinçage (5) comporte une première partie cylindrique symétrique présentant une première section transversale et une deuxième partie cylindrique disposée coaxialement derrière la première partie cylindrique symétrique présentant une deuxième section transversale,
un épaulement radial (9) étant formé à la transition entre la première partie et la deuxième partie, lequel épaulement forme une surface de butée pour la pièce (1) lorsque le dispositif de rinçage (5) est placé sur la pièce (1), et
**en ce que** les ouvertures de sortie (14) de tous les canaux d'alimentation en gaz de rinçage (11) et les ouvertures d'entrée (17) de tous les canaux d'aspiration de gaz de rinçage (12) sont disposées dans l'épaulement radial (9).

2. Dispositif de rinçage (5) selon la revendication 1,
pour lequel l'au moins un canal d'alimentation en gaz de rinçage (11) comprend une chambre formée à l'intérieur du dispositif de rinçage (5),
laquelle chambre communique avec le raccord (13) pour la conduite d'alimentation en gaz de rinçage et avec l'ouverture d'entrée (14), et
l'au moins un canal d'aspiration de gaz de rinçage (12) comprenant une chambre (18) formée à l'intérieur du dispositif de rinçage (5),
laquelle chambre communique avec le raccord (16) pour la conduite d'évacuation du gaz de rinçage et avec l'ouverture de sortie (17).

3. Dispositif de rinçage (5) selon la revendication 1 ou 2,
le dispositif comportant deux canaux d'alimentation en gaz de rinçage (11) traversant ledit dispositif de rinçage (5) et deux canaux d'aspiration de gaz de rinçage (12) traversant ledit dispositif de rinçage (5),
les canaux d'alimentation en gaz de rinçage (11) présentant chacun, à une première extrémité, un raccord (13) pour une conduite d'alimentation en gaz de rinçage et, à une deuxième extrémité, une ouverture de sortie (14),
les canaux d'aspiration de gaz de rinçage (12) comportant chacun, à une première extrémité, un raccord (16) pour une conduite d'évacuation de gaz de rinçage et, à une deuxième extrémité, une ouverture d'entrée (17), et
un canal d'aspiration de gaz de rinçage (11) et un canal d'alimentation en gaz de rinçage (12) étant disposés respectivement sur des côtés opposés (15) de l'ouverture centrale (6).

4. Procédé de traitement d'une surface (8) d'une pièce (1) au moyen d'un laser et avec un dispositif de rinçage (5) pour un rinçage au gaz pendant le traitement au laser,
le dispositif de rinçage (5) comportant une ouverture centrale traversante (6), au moins un canal d'alimentation en gaz de rinçage (11) s'étendant à travers le dispositif de rinçage (5), au moins un canal d'aspiration de gaz de rinçage (12) s'étendant à travers le dispositif de rinçage (5) et au moins une section de centrage,
l'au moins un canal d'alimentation en gaz de rinçage (11) comportant, à une première extrémité, un raccord (13) pour une conduite d'alimentation en gaz de rinçage et, à une deuxième extrémité, une ouverture de sortie (14),
l'au moins un canal d'aspiration de gaz de rinçage (12) comportant, à une première extrémité, un raccord (16) pour une conduite d'évacuation de gaz de rinçage et, à une deuxième extrémité, une ouverture d'entrée (17), et l'ouverture de sortie (14) de l'au moins un canal d'alimentation en gaz de rinçage (11) et l'ouverture d'entrée de l'au moins un canal d'aspiration de gaz de rinçage (12) étant disposées sur des côtés opposés de l'ouverture centrale (6),
lequel procédé comprend les étapes suivantes :
- Mise en place du dispositif de rinçage (5) sur la pièce (1), la pièce (1) présentant une chambre (10) ouverte sur au moins un premier côté de la pièce (1), de telle sorte que la section de centrage du dispositif de rinçage (5) interagit avec une zone de centrage de la pièce (1) disposée sur le côté ouvert de la pièce (1), de telle sorte que l'ouverture centrale (6) du dispositif de rinçage (5), l'ouverture de sortie (14) de l'au moins un canal d'alimentation en gaz de rinçage (11) et l'ouverture d'entrée (17) de l'au moins un canal d'aspiration de gaz de rinçage (12) du dispositif de rinçage (5) communiquent avec la chambre (10),
- Alimentation en gaz dans la chambre (10) par l'ouverture de sortie (14) de l'au moins un canal d'alimentation en gaz de rinçage (11) et aspiration de gaz par l'ouverture d'entrée (17) de l'au moins un canal d'aspiration de gaz de rinçage (12) ; et
- Pendant l'alimentation en gaz dans la chambre (10) et pendant l'aspiration de gaz, irradiation par rayonnement laser à travers l'ouverture centrale (6) du dispositif de rinçage (5) sur une surface (8) de la pièce (1) disposée à l'intérieur de la chambre (10) et traitement de la surface (8) de la pièce (1), notamment pour rendre rugueuse la surface (8) à l'aide du rayonnement laser.

5. Procédé pour la fabrication d'un capteur destiné à déterminer au moins une grandeur process d'un produit dans un réservoir, lequel procédé comprend les étapes suivantes :
- Réalisation d'une rugosité sur une face arrière d'une membrane (3) d'une unité apte à vibrer, laquelle unité comprend au moins la membrane (3) et au moins un élément vibrant (4) disposé sur une face avant de la membrane (3) opposée à la face arrière de la membrane (3), laquelle opération de rugosité s'effectue au moyen du procédé selon la revendication 4 ;
- Collage d'une unité d'entraînement et de réception, laquelle est conçue pour exciter l'unité apte à vibrer mécaniquement au moyen d'un signal d'excitation électrique avec une fréquence d'excitation afin de produire des vibrations dans le mode de vibration correspondant à la fréquence d'excitation, et pour recevoir les vibrations mécaniques de l'unité apte à vibrer et les convertir en un signal de réception électrique, sur la face arrière rendue rugueuse de la membrane (3) ; et
- Connexion de l'unité d'entraînement et de réception à une unité électronique, de telle sorte que l'unité électronique et l'unité d'entraînement et de réception coopèrent pour générer le signal d'excitation à partir du signal de réception et pour déterminer la grandeur process à partir du signal de réception.
